# EUROPEAN PATENT APPLICATION

(11) **EP 3 865 608 A1**
(43) Date of publication of application: **18.08.2021**
(21) Application number: 18830492.7
(22) Date of filing: 10.10.2018
(51) Int. Cl.: C25D 11/02, C25D 11/04, C25D 11/08, C25D 11/16, C25D 11/18, C25D 11/22, C25D 11/24, B60B 21/00, B60B 3/06

(54) **METHOD FOR SURFACE TREATMENT OF A PIECE OF ALUMINUM ALLOY AND A PIECE MADE OF ANODIZED ALUMINUM ALLOY**

(71) Applicant: MAPSA S. COOP., 31160 Orkoien (ES)
(72) Inventor: DIAZ FUENTES, Mario, 20014 Donostia - San Sebastian (ES); VARA SALAZAR, Gemma, Andrea, 20014 Donostia - San Sebastian (ES); ORTIZ CAMINO, Olaia, 20014 Donostia - San Sebastian (ES); DIEZ SILANES, Jose, Antonio, 20014 Donostia - San Sebastian (ES); SOTES DIAZ, David, 31160 Orkoien (ES); MUNARRIZ SALAMANCA, Ruben, 31160 Orkoien (ES); LOPEZ ANDRES, Alberto, 31160 Orkoien (ES)
(74) Representative: Igartua, Ismael
(86) International application number: PCT/ES2018/070661
(87) International publication number: WO 2020/074754

(57) **Abstract**

A method for the surface treatment of a piece of aluminum alloy, comprising on its surface pores of a size of up to 500 µm, comprising an anodization step of at least a part of the surface of the piece, an aluminum oxide layer (23) being generated on said part of the surface, the anodization being carried out by current pulses, and the aluminum oxide layer (23) comprising pores (24) of a size between 25 and 500 nm. The invention also relates to a piece (20) of anodized aluminum alloy comprising an aluminum oxide layer (23), said aluminum oxide layer (23) comprising on its surface pores (24) of a size between 25 and 500 nm.

## Description

### TECHNICAL FIELD

The present invention relates to methods for the surface treatment of pieces made of metal.

### PRIOR ART

In the automotive sector, pieces made of aluminum alloys in particular are used for manufacturing structural elements, such as wheel rims, which are subsequently dyed by means of applying paints and lacquers.

Many of these parts made of aluminum alloy are obtained by aluminum casting processes along with other alloy elements, such as silicon, copper, and magnesium, and they are characterized by having a high content of intermetallic compounds and micropores generated during the casting process which, when the piece is subjected to a dyeing process, cause the occurrence of color defects, often with the occurrence of white or discolored spots visible to the human eye which is unacceptable for the automotive sector.

Direct current anodization of the surfaces of those pieces made of metal prior to dyeing is known in the prior art. Direct current anodization generates an aluminum oxide layer on the surface of these pieces. The layer is achieved by means of electrochemical methods and provides greater aluminum strength and durability. Nevertheless, color defects after dyeing continue to occur with this treatment.

### DISCLOSURE OF THE INVENTION

The object of the invention is to provide a method for the surface treatment of a piece of aluminum alloy and a piece of anodized aluminum alloy comprising an aluminum oxide layer, as defined in the claims.

A first aspect of the invention relates to a method for the surface treatment of a piece of aluminum alloy, particularly a wheel rim obtained by casting, comprising on its surface pores of a size of up to 500 µm, comprising an anodization step of at least a part of the surface of the piece, an aluminum oxide layer being generated on said part of the surface, the anodization being carried out by current pulses, and the aluminum oxide layer comprising pores of a size between 25 and 500 nm.

A second aspect of the invention relates to a piece of anodized aluminum alloy, wherein the anodized surface comprises pores of a size between 25 and 500 nm.

Pulse current anodization allows, on one hand, generating an aluminum oxide layer with a thickness that is approximately uniform on the entire treated surface, as well as controlling the size of the pore in the aforementioned ranges, assuring the non-occurrence of color defects when the treated part is subjected to a dyeing process.

With the method of the invention, an aluminum oxide layer is generated both in pure aluminum regions and in regions with the presence of intermetallic compounds and/ or pores, which allows for a complete coating and for controlling the size of the pore in the aforementioned range. These features allow for the non-occurrence of color defects when the treated part is subjected to a dyeing process.

The invention is therefore an efficient and cost-effective alternative for obtaining dyed pieces made of aluminum alloy, particularly aluminum alloys with a high content of alloying elements, with an aesthetic finish that does not present any color defects.

### DESCRIPTION OF THE DRAWINGS

Figure 1 shows the steps of an embodiment of the method of the invention.
Figure 2 shows a section view of a piece made of anodized aluminum alloy obtained by the method of the invention.

### DETAILED DISCLOSURE OF THE INVENTION

A first aspect of the invention relates to a method for the surface treatment of a piece of aluminum alloy with a high content of alloying elements, such as silicon, copper and/or magnesium, particularly a wheel rim that is processed or manufactured by casting in molds, comprising on its surface pores of a size of up to 500 µm, comprising an anodization step of at least a part of the surface of the piece, an aluminum oxide layer being generated on said part of the surface, the anodization being carried out by current pulses, and the aluminum oxide layer comprising on its surface pores of a size between 25 and 500 nm.

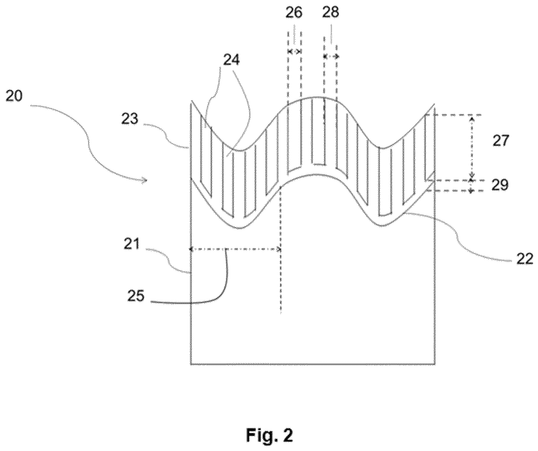

Figure 2, which is not drawn to scale, shows the piece 20 made of anodized aluminum alloy obtained by the method of the invention, wherein a piece 21 of aluminum alloy, preferably with a high content of alloying elements such as silicon, copper, and/or magnesium, comprises on its surface 22 pores of a size between 1 and 500 microns, being on said surface 22 an aluminum oxide layer 23 obtained by pulse current anodization of the part 21, said aluminum oxide layer 23 comprising on its outer surface pores 24 of a size between 25 and 500 nm. The aluminum oxide layer 23 has a honeycomb-shaped hexagonal cell structure. The pore 24 of each cell has an approximately cylindrical geometry.

In the context of the invention, the size of the pore refers to the width of the pore, represented by the distance 25 corresponding to the width of the pore of the piece 21 made of aluminum, and by the distance 26 corresponding to the width of the pore of the layer 23.

The inventors have observed that the range of the size of the pore 24 of the aluminum oxide of the invention subsequently allows a suitable incorporation and duration of the dye in the pore and therefore in the piece.

Smaller sizes of the pore 24 would prevent a suitable incorporation of the dye in the pore 24, and larger sizes would affect the duration of the color since they would be more exposed to adverse conditions, for example, in the case of the wheel rims, to weather conditions and friction, which lead to the color peeling off.

This invention may apply for pieces of any aluminum alloy series, from series 2000 to series 8000. These series refer to aluminum alloys classifications depending on the main alloying element or elements in their composition.

In a preferred embodiment, this invention may apply for pieces of aluminum alloy of the 6000 series that are characterized by having silicon and magnesium as the main alloying elements, which lead to intermetallic compounds being generated during the heat treatment thereof. Furthermore, given the intrinsic features of the casting process, these pieces are characterized by having pores of a size in the range of microns, usually between 1 micron and 500 microns.

In a preferred embodiment, the anodization step by pulses is performed in a sulfuric acid medium with a molar concentration between 1.3 M and 2.8 M, preferably 2.2 M.

In a preferred embodiment, each applied pulse has an electric potential of between 10 and 20 V and a duration of between 1 and 5 minutes. In a preferred embodiment, between 10 and 20 pulses are applied, preferably 15 pulses, with a time difference in the application of pulses being between 1 second and 3 minutes.

In a preferred embodiment, the temperature of the medium in which anodization is carried out is comprised between 15°C and 30°C, preferably between 20°C and 25°C.

By means of combining the aforementioned conditions, the inventors have observed that the growth and thickness of the aluminum oxide layer 23, as well as the size and shape of the pores 24 generated during the anodization step, and the distance between said pores 24, can be controlled.

Therefore, in a preferred embodiment the distance 28 between the pores 24 of the aluminum oxide layer which is generated during the anodization step is between 20 and 700 nm. The inventors have demonstrated that this distance range favors the duration of the color in a uniform manner in the piece that is subsequently dyed.

In another embodiment, the thickness of the aluminum oxide layer 23 which is generated during the anodization process is between 5 and 100 µm, preferably between 10 and 30 µm. The method of the invention allows achieving a thickness of the aluminum oxide layer 23 on the entire treated surface, including the regions of the surface of the piece to be treated containing intermetallic compounds and/or pores formed in the casting process. The pores 24 have a depth 27 such that they are arranged on a base 29 of the aluminum oxide layer 23 having in this embodiment a thickness of less than 2 µm, preferably less than 1 µm. This embodiment favors better incorporation of the dye in the subsequent dyeing process and prevents the anodized element from having a matte appearance.

After anodization, the piece is usually washed with an aqueous solution. Nevertheless, the inventors have found that this washing is sometimes not enough, so in a preferred embodiment, after the anodization step, the anodized piece is subjected to a neutralization step whereby a liquid is applied on the anodized surface, said liquid having a pH value between 10 and 13, said liquid preferably being an ammonia solution comprising a pH value of 11. The inventors have found that this neutralization step does not jeopardize the subsequent dyeing of the piece, and that it is furthermore much more efficient since it eliminates any trace or residue of sulfuric acid present inside the pores 24 which could cause discoloring defects in the subsequent dyeing.

In a preferred embodiment, this neutralization step is applied between 1 and 5 minutes, which is sufficient time to assure the elimination of any trace of acid that may affect the subsequent dyeing.

In a preferred embodiment, after the neutralization step, the method of the invention comprises a washing step whereby an aqueous liquid is applied onto the neutralized surface, said liquid having a neutral pH value. The treated surface is thereby ready for subsequent dyeing.

In a preferred embodiment, after the washing step, the method comprises the following steps: an electro coloring and/or chemical dyeing step for dyeing the washed piece, and a color sealing step.

Chemical dyeing consists of a method of staining by means of a dyeing agent, which is introduced in the pores of the treated surface. These dyeing agents can be organic or inorganic compounds that are highly soluble in water with high resistance to degradation due to sunlight, such as acid dyes, substantive dyes, such as alizarin and indigo dyes, dyes based on metallic complexes, and diazo dyes.

Nevertheless, the dyeing agent is sometimes unable to cover the inside of the pore 24, giving rise to visual defects in the form of white spots which unacceptably stand out against the rest of the dyed regions, so in a preferred embodiment, prior to chemical dyeing, the previously neutralized and washed surface is subjected to an electro coloring step. Electro coloring consists of the deposition of particles in the pore 24 by means of applying alternating current to a metal salt solution. In a preferred embodiment, the electro coloring step consists of introducing the surface of the treated piece in a bath comprising metal salts and sulfuric acid to which there is applied an alternating current of between 7 and 25 V of maximum voltage for a time between 20 seconds and 30 minutes and a frequency of between 20 and 300 Hz, preferably 50 Hz. The electro coloring assures that the inside, specifically the bottom, of the pore 24 is coated by the metal particles, which provide the color. Examples of metal salt solutions that can be used for electro coloring include but are not limited to aqueous solutions of tin, cobalt, nickel, copper, and the like.

The dyed piece is subsequently subjected to the color sealing step, which can be hot or cold sealed. The hot sealing process consists of immersing the dyed piece in water at a temperature of between 90°C and 100°C. The water hydrates the aluminum layer, making the pores 24 close, thereby sealing the dye inside the pore 24. The cold sealing process is performed at a pH comprised between 4.5 and 8, at a temperature comprised between 20 and 40°C, preferably between 25 and 35°C, using metal salts or metal oxides or chromates. Nickel salts or cobalt salts, in combination with alkaline metallic fluorides such as NiF₂ or NaF and anionic and non-ionic surfactants, can particularly be used. For example, the sealing agent may contain organic acid salts and non-ionic surfactants, for example, P3-almeco®seal 1 (Henkel). The duration of the sealing process depends on the thickness of the anodic layer, for example, between 0.5 and 2.5 minutes, preferably from 0.7 to 1.2 minutes per micron of thickness of the oxide layer, being performed in a total time of between 5 and 100 minutes, preferably between 10 and 30 minutes. By means of the sealing, corrosion resistance of the piece made of an anodized alloy increases.

The piece sometimes contains impurities and elements that may interfere with the anodization and dyeing, so in a preferred embodiment, the piece prior to anodization is subjected to a degreasing and/or acid pickling step. These steps serve to eliminate greases, oxides, and other elements from the surface that may inhibit or alter the subsequent anodization and/or dyeing.

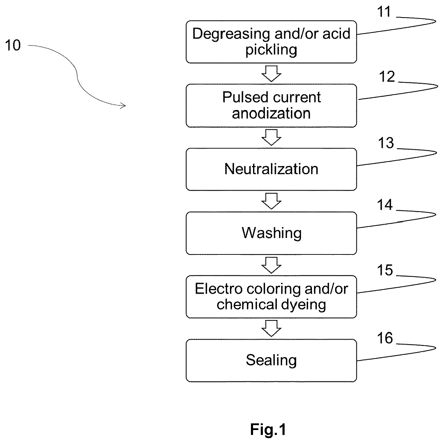

Figure 1 shows an embodiment of the method 10 for the treatment of a piece made of aluminum alloy comprising the following steps:
- degreasing and/or acid pickling 11;
- pulsed current anodization 12;
- neutralization 13;
- washing 14;
- electro coloring and/or chemical dyeing 15; and
- sealing 16.

In a preferred embodiment of the invention, additional washes 14 are performed between steps 11, 12, 13, 15, and/or 16, illustrated in Figure 1.

A second aspect of the invention, illustrated with the embodiment of Figure 2, relates to a piece 20 of anodized aluminum alloy comprising on its surface an aluminum oxide layer 23, said aluminum oxide layer comprising on its surface pores 24 of a size between 25 and 500 nm, preferably obtained by the method of the invention.

In a preferred embodiment, the piece 20 of aluminum alloy, preferably with a high content of alloying elements such as silicon, copper, and/or magnesium, comprises on its surface 22 pores of a size between 1 and 500 microns, comprising on said surface 22, preferably after same, an aluminum oxide layer 23 comprising on the surface thereof pores 24 of a size between 25 and 500 nm.

In a preferred embodiment, the distance between the pores 24 of the aluminum oxide layer 23 is between 20 and 700 nm.

In a preferred embodiment, the aluminum oxide layer 23 has a thickness of between 5 and 100 µm, preferably between 10 and 30 µm, the sum of the depth 27 of the pores 24 and the base 29 of the aluminum oxide layer 23 coinciding with the thickness of said layer 23.

In a preferred embodiment, said anodized surface is electro-colored and/or chemically dyed.

This piece of anodized aluminum alloy can be any component of the automotive sector that requires an aesthetic finish, such as a wheel rim. In a preferred embodiment, the piece made of alloy is a wheel rim made of aluminum alloy obtained by casting.

An illustrative example which clearly shows the features and advantages of the invention is described below. Nevertheless, it must not be interpreted as being limiting of the object of the invention as it is defined in the claims.

Example 1: Comparison of the color defects present in a piece of aluminum alloy treated according to the method of the invention and a piece treated according to the method of the prior art.

Piece 1: A surface with an area of 0.3 dm² of a piece of aluminum alloy from group A356 is subjected to the following treatment:
- Alkaline degreasing with GardoClean® S 5201, the temperature of the bath being 60°C and the duration of treatment 5 minutes.
- Acid pickling with GardoClean® S 5240, the temperature of the bath being 25°C and the duration of treatment 2 minutes.
- Direct current anodization in 2.2 M sulfuric acid, the temperature of the bath being 20°C, with a constant voltage of 13 V and the duration of treatment of 30 minutes.
- Chemical dyeing with the Sanodure® Bronze 2LW dye at a concentration of 0.5 g/L, with a pH value of 5.40, the temperature of the bath being 60°C and the duration of treatment 13 minutes.

Gardoclean® S 5201 is a slightly alkaline, silicate- and borate-free liquid degreasant.

Gardoclean® S 5201 has primarily been formulated for degreasing steel and galvanized steel, but it is also suitable for degreasing aluminum surfaces.

Gardoclean® S 5240/2 is a liquid acid pickling product suitable for aluminum and magnesium materials. It is primarily used before conversion treatment after alkaline degreasing with the corresponding washing steps. Gardoclean® S 5240/2 has degreasant properties and is suitable for removing oil, grease, and coolants, as well as solid residues such as shavings, abrasion metals, etc.

The Sanodure® Bronze 2LW is water-soluble azoic dye, an anionic chromium complex, used for dyeing anodized aluminum by adsorption.

Result: Number of visible color defects in a treated area at a distance of 80 cm from the eye: 130 defects/dm².

Piece 2: A surface with an area of 0.3 dm² of a piece made of aluminum alloy from group A356 is subjected to the following treatment:
- Alkaline degreasing with GardoClean® S 5201, the temperature of the bath being 60°C and the duration of treatment 5 minutes.
- Acid pickling with GardoClean® S 5240, the temperature of the bath being 25°C and the duration of treatment 2 minutes.
- Direct current anodization in 2.2 M sulfuric acid, the temperature of the bath being 20°C, with a constant voltage of 13 V and the duration of treatment of 30 minutes.
- Neutralization in ammonia with a pH value of 11, the temperature of the bath being room temperature and the duration of treatment 3 minutes.
- Chemical dyeing with the Sanodure® Bronze 2LW dye at a concentration of 0.5 g/L, with a pH value of 5.40, the temperature of the bath being 60°C and the duration of treatment 13 minutes.

Result: Number of visible color defects in a treated area at a distance of 80 cm from the eye: 25 defects/dm².

Piece 3: A surface with an area of 3 dm² of a piece made of aluminum alloy from group A356 is subjected to the following treatment:
- Alkaline degreasing with GardoClean® S 5201, the temperature of the bath being 60°C and the duration of treatment 5 minutes.
- Acid pickling with GardoClean® S 5240, the temperature of the bath being 25°C and the duration of treatment 2 minutes.
- Pulse current anodization in 2.2 M sulfuric acid, the temperature of the bath being 20°C, the number of pulses being 15, each pulse having a voltage of 13 V and a duration of 2 minutes, each pulse being spaced apart by one minute.
- Neutralization in ammonia with a pH value of 11, the temperature of the bath being room temperature and the duration of treatment 3 minutes.
- Chemical dyeing with the Sanodure® Bronze 2LW dye at a concentration of 0.5 g/L, with a pH value of 5.40, the temperature of the bath being 60°C and the duration of treatment 13 minutes.

Result: Number of visible color defects in a treated area at a distance of 80 cm from the eye: 5 defects/dm².

Piece 4: A surface with an area of 0.3 dm² of a piece made of aluminum alloy from group A356 is subjected to the following treatment:
- Alkaline degreasing with GardoClean® S 5201, the temperature of the bath being 60°C and the duration of treatment 5 minutes.
- Acid pickling with GardoClean® S 5240, the temperature of the bath being 25°C and the duration of treatment 2 minutes.
- Pulse current anodization in 2.2 M sulfuric acid, the temperature of the bath being 25°C, the number of pulses being 15, each pulse having a voltage of 13 V and a duration of 2 minutes, each pulse being spaced apart by one minute.
- Neutralization in ammonia with a pH value of 11, the temperature of the bath being room temperature and the duration of treatment 3 minutes.
- Chemical dyeing with the Sanodure® Bronze 2LW dye at a concentration of 0.5g/L, with a pH value of 5.40, the temperature of the bath being 60°C and the duration of treatment 13 minutes.

Result: Number of visible color defects in a treated area at a distance of 80 cm from the eye: 0 defects/dm².

Piece 5: A surface with an area of 0.3 dm² of a piece made of aluminum alloy of group A356 is subjected to the following treatment:
- Alkaline degreasing with GardoClean® S 5201, the temperature of the bath being 60°C and the duration of treatment 5 minutes.
- Acid pickling with GardoClean® S 5240, the temperature of the bath being 25°C and the duration of treatment 2 minutes.
- Pulse current anodization in 2.2 M sulfuric acid, the temperature of the bath being 25°C, the number of pulses being 15, each pulse having a voltage of 13 V and a duration of 2 minutes, each pulse being spaced apart by one minute.
- Neutralization in ammonia with a pH value of 11, with the temperature of the bath being room temperature and the duration of treatment 3 minutes.
- Electrocoloring in a solution of tin sulfate in sulfuric acid, with the temperature of the bath being 19°C at direct current of 10 V for 15 seconds, followed by a step of alternating current at 16 V for 15 seconds.
- Chemical dyeing with the Sanodure® Bronze 2LW dye at a concentration of 0.5 g/L, with a pH value of 5.40, at a temperature of 60°C for 2 minutes.

Result: Number of visible color defects in a treated area at a distance of 80 cm from the eye: 0 defects/dm².

The following table summarizes the numbers of color defects per dm² detected in each piece:

| | Piece 1 | Piece 2 | Piece 3 | Piece 4 | Piece 5 |
|---|---|---|---|---|---|
| Number of color defects per dm² | 130 | 25 | 5 | 0 | 0 |

## Claims

1. Method for the surface treatment of a piece of aluminum alloy (21), in particular a wheel rim manufactured by casting, comprising on its surface (22) pores of a size of up to 500 µm, comprising an anodization step of at least a part of the surface (22), an aluminum oxide layer (23) being generated on said part of the surface (22), the anodization being carried out by current pulses, and the aluminum oxide layer (23) comprising pores (24) of a size between 25 and 500 nm.

2. Method according to claim 1, wherein in the anodization step by pulses each applied pulse has an electric potential of between 10 and 20 V and a duration of between 1 and 5 minutes.

3. Method according to claim 1 or 2, wherein in the anodization step between 10 and 20 pulses are applied, preferably 15 pulses, with a time difference in the application of pulses of between 1 second and 3 minutes.

4. Method according to any of the preceding claims, wherein the anodization step by pulses is performed in a sulfuric acid medium with a molar concentration between 1.3 M and 2.8 M.

5. Method according to any of the preceding claims, wherein the anodization step is carried out at a temperature of between 15°C and 30°C.

6. Method according to any of the preceding claims, wherein the distance between the pores (24) of the aluminum oxide layer (23) which is generated during the anodization step is between 20 and 700 nm.

7. Method according to any of the preceding claims, wherein the thickness of the aluminum oxide layer (23) which is generated during the anodization process is between 5 and 100 µm.

8. Method according to any of the preceding claims, wherein the pores (24) have a depth (27) such that they are arranged on a base (29) of the aluminum oxide layer (23), the base (29) having a thickness of less than 2 µm, preferably less than 1 µm.

9. Method according to any of the preceding claims, comprising a neutralization step after the anodization step whereby a liquid is applied on the anodized surface, said liquid having a pH value between 10 and 13.

10. Method according to claim 9, wherein the liquid of the neutralization step is an ammonia solution comprising a pH value of 11.

11. Method according to claim 9 or 10, wherein the liquid of the neutralization step is applied between 1 and 5 minutes.

12. Method according to any of claims 9 to 11, comprising a washing step after the neutralization step whereby an aqueous liquid is applied onto the neutralized surface, said liquid having a neutral pH value.

13. Method according to claim 12, comprising the following steps after the washing step:
- an electrocoloring and/or chemical dyeing step by dipping the washed part, and
- a color sealing step.

14. Method according to claim 13, wherein in the electro coloring step the piece is introduced in a bath comprising metal salts and sulfuric acid, and a current of between 7 and 25 V is applied to it for a time between 20 seconds and 30 minutes.

15. Method according to claim 13 or 14, wherein the sealing step consists of a metal salt and/or hot water bath.

16. Method according to any of the preceding claims, wherein the piece has been subjected to a degreasing and/or acid pickling step before the anodization step.

17. Piece of anodized aluminum alloy comprising an aluminum oxide layer (23), said aluminum oxide layer (23) comprising on its surface pores (24) of a size between 25 and 500 nm.

18. Piece according to claim 17, wherein the piece made of aluminum alloy comprises on its surface (22) pores (24) of a size between 1 and 500 microns, comprising on said surface (22) the aluminum oxide layer (23).

19. Piece according to claim 17 or 18, wherein the distance (28) between the pores (24) of the aluminum oxide layer (23) is between 20 and 700 nm.

20. Piece according to any of claims 17 to 19, wherein the aluminum oxide layer (23) has a thickness of between 5 and 100 µm.

21. Piece according to any of claims 18 to 20, wherein the pores (24) have a depth (27) such that they are arranged on a base (29) of the aluminum oxide layer (23), the base (29) having a thickness of less than 2 µm, preferably less than 1 µm.

22. Piece according to any of claims 17 to 21, wherein the piece is a wheel rim.
